# EUROPÄISCHE PATENTANMELDUNG

(11) **EP 1 101 714 A1**
(43) Veröffentlichungstag der Anmeldung: **23.05.2001**
(21) Anmeldenummer: 00124767.5
(22) Anmeldetag: 13.11.2000
(51) Int. Cl.: B65G 15/12

(54) **Fördersystem für Transportbehälter**

(30) Priorität: 18.11.1999 DE 29920239 U
(71) Anmelder: mechatronik Gesellschaft zur Entwicklung, und Anwendung von Mechanik und Mikroelektronic mbH, 41061 Mönchengladbach (DE)
(72) Erfinder: Schwalm , Hans, D-41239 Mönchengladbach (DE)
(74) Vertreter: Bonsmann, Manfred, Dipl.-Ing.

(57) **Zusammenfassung**

Die Erfindung betrifft ein Fördersystem (1) für Transportbehälter (7) entlang einer vorgegebenen Bahn, insbesondere für Gepäcktransportsysteme moderner Flughäfen, bei dem mindestens zwei parallele, endlos umlaufende - vorzugsweise als Zahnriemen ausgebildete - Förderbänder (2) vorgesehen sind, welche einen Transportbehälter (7) gemeinsam tragen und führen können. Anders als bei den bekannten Transportsystemen wird dabei nicht die gesamte Breite der Transportstraße von einem Förderband gebildet, sondern die Förderbänder werden ähnlich wie Schienen am Rand der Förderstraße angeordnet, so dass ein Transportbehälter (7) jeweils mit seinen Endbereichen auf den Förderbändern (2) aufliegt und von diesen bewegt werden kann. Die einzelnen Förderbänder (2) können verhältnismäßig schmal gehalten werden können, so dass diese mit Geschwindigkeiten von bis zu 6 m/s umlaufen können.

## Beschreibung

Die Erfindung betrifft ein Fördersystem für Transportbehälter entlang einer vorgegebenen Bahn.

Fördersysteme der genannten Art werden zum Beispiel auf Flughäfen zum Transport von Gepäckstücken eingesetzt. Hierbei geht es z.B. darum, das Transportgut entlang gleichbleibender Wege von den Gepäckaufgaben durch die Passagiere zu den Beladestationen für die Flugzeuge beziehungsweise umgekehrt von den Entladestationen der Flugzeuge zur Gepäckausgabe für die Passagiere zu befördern.

Dabei ist im Stand der Technik die Möglichkeit bekannt, den Transport durch endlos umlaufende Transportbänder vorzunehmen, deren Breite so groß ist, dass sie die üblicherweise zu transportierenden Gepäckstücke wie zum Beispiel Koffer aufnehmen können. Diese Systeme sind zwar verhältnismäßig kostengünstig, die Transportgeschwindigkeit ist jedoch auf etwa maximal 2 m/s begrenzt, da ansonsten die Walkarbeiten der Transportbänder und damit der Energieverbrauch und der Verschleiß zu groß würden.

Höhere Transportgeschwindigkeiten von ca. 10 m/s werden mit sogenannten Shuttle-Systemen erreicht, bei denen einzelne auf Schienen geführte Transportbehälter die zu befördernden Gegenstände aufnehmen. Nachteilig bei diesen Systemen ist jedoch, dass die Investitions- und Betriebskosten verhältnismäßig hoch sind.

Aufgabe der vorliegenden Erfindung war es daher, ein kostengünstiges Fördersystem zur Verfügung zu stellen, mit welchem Fördergeschwindigkeiten von über 2 m/s erreicht werden können.

Diese Aufgabe wird durch ein Fördersystem für Transportbehälter gemäß Anspruch 1 gelöst, welches dadurch gekennzeichnet ist, dass es mindestens zwei parallele, endlos umlaufende Förderbänder enthält, welche einen Transportbehälter gemeinsam tragen können.

Gemeinsames Tragen des Transportbehälters bedeutet dabei, dass der Transportbehälter bei seiner Beförderung auf beiden Förderbändern gleichzeitig aufliegt. Ähnlich wie bei den oben beschriebenen Shuttle-Systemen werden die zu transportierenden Gegenstände in Transportbehältern befördert. Dies hat unter anderem den Vorteil, dass sie dort gegenüber Temperatur- und Umwelteinflüssen geschützt sind und durch Kontakt zu bewegten Teilen des Transportsystems nicht beschädigt werden können. Anders als bei den Shuttle-Systemen werden die Transportbehälter jedoch nicht von einem aufwendigen Schienensystem geführt und bewegt, sondern von dem erfindungsgemäßen Fördersystem. Dieses Fördersystem besteht aus mindestens zwei parallelen, beabstandeten Förderbändern dazwischen, so dass anders als bei den bekannten Transportbändern nicht die gesamte Breite der Transportstraße von dem Förderband gebildet wird. Vielmehr reicht es, die (mindestens) zwei Förderbänder ähnlich wie Schienen am Rand der Förderstraße anzuordnen, so dass ein Transportbehälter jeweils mit seinen Endbereichen auf den Förderbändern aufliegen und hiervon bewegt werden kann. Der Vorteil dieser Anordnung liegt darin, dass die einzelnen Förderbänder verhältnismäßig schmal gehalten werden können, so dass die bei ihrem Umlauf aufzuwendenden Walkarbeiten und der Verschleiß gering sind. Hierdurch ist es möglich, die Förderbänder ohne Nachteile mit Geschwindigkeiten von bis zu 6 m/s umlaufen zu lassen. Das erfindungsgemäße Fördersystem erlaubt somit bei geringen Investitions- und Betriebskosten hohe Fördergeschwindigkeiten, wie sie zum Beispiel im Gepäcktransportsystem moderner Flughäfen benötigt werden. Eine zusätzliche Führung der Transportbehälter - z.B. durch Rollen - ist erfindungsgemäß nicht notwendigerweise erforderlich; im Regelbetrieb stehen die Transportbehälter lediglich mit den Förderbändern in Kontakt. Um bei Störungen ein Hinterfallen der Transportbehälter von der Transportbahn zu vermieden, kann jedoch eine Art Leitplanke an beiden Seiten der Transportbahn vorgesehen sein.

In einer Weiterbildung der Erfindung gemäß Anspruch 2 sind die Förderbänder als Zahnriemen ausgestaltet. Hierdurch ist es möglich, das für den Transport notwendige Drehmoment auf die Förderbänder zu übertragen, ohne dass hierfür eine hohe Vorspannung erforderlich wäre. Ein Transportsystem für einen Flughafen wird typischerweise modulartig aus einzelnen Transportsegmenten aufgebaut, deren Länge etwa 20 bis 30 m beträgt. Um über eine derart große Strecke das erforderliche Drehmoment auf ein glattes Transportband übertragen zu können, müsste dieses eine Vorspannung von etwa dem zwei- bis dreifachen der Umfangskraft besitzen. Dies wäre zwar technisch erreichbar, würde jedoch entsprechend große Spannvorrichtungen erfordern, für die der notwendige Raum in der Regel nicht vorhanden ist. Zudem steigern derartige Spannvorrichtungen die Kosten des Systems erheblich. Durch die Verwendung von Zahnriemen kann dagegen auf eine hohe Vorspannung verzichtet werden, da die Kraftübertragung auf den Zahnriemen formschlüssig erfolgt. Die erforderliche Spannkraft reduziert sich daher auf einen Betrag von dem etwa 1,2-fachen der Umfangskraft.

Um die Transportfunktion ausüben zu können, ist die Außenseite der Zahnriemen in der Regel mit einem rutschfesten, griffigen Belag beschichtet. Die Innenseite sollte dagegen möglichst glatt sein, um die Reibungsverluste auf dem Untergrund und an den Umlenkstellen zu minimieren.

Die Antriebsrollen der parallelen Förderbänder werden nach Anspruch 3 vorzugsweise auf einer gemeinsamen Welle angeordnet. Neben einer Vereinfachung des Antriebsmechanismus hat dies den Vorteil, dass die parallelen Förderbänder zwangsläufig mit der exakt gleichen Geschwindigkeit angetrieben werden, so dass die auf den Förderbändern aufliegenden Transportbehälter keiner Rotation durch unterschiedlich schnell laufende Bänder unterliegen.

Dagegen sind die Umlenkrollen der Förderbänder, an welchen kein Antrieb stattfindet, nach Anspruch 4 vorzugsweise unabhängig voneinander und mit separaten Spannvorrichtungen versehen. Auf diese Weise ist es möglich, typischerweise existierende Längenunterschiede der Förderbänder individuell mit Hilfe der Spannvorrichtungen auszugleichen.

Um im Zwischenraum zwischen den Umlenkrollen und Antriebsrollen ein Durchhängen der Förderbänder unter ihrer Belastung zu vermeiden, werden unter den Förderbändern vorzugsweise Gleitflächen zur Abstützung der Bänder angeordnet. Nach Anspruch 5 sind diese Gleitflächen vorteilhafterweise als Lochbleche ausgebildet. Lochbleche haben gegenüber normalen Blechen den Vorteil, dass mit ihnen die Lärmentwicklung erheblich reduziert werden kann. Weiterhin kann der sich in der Einlaufzeit der Förderbänder einstellende leichte Abrieb durch die Löcher der Lochbleche durchfallen und unterhalb der Bleche aufgefangen werden, so dass er den Betrieb des Systems nicht stören kann.

Bei den genannten Lochblechen sind nach Anspruch 6 die dem Förderband zugewandten Kanten vorzugsweise abgerundet. Dies betrifft sowohl die Kanten an den Außenrändern der Lochbleche als auch die von den Löchern selbst gebildeten Kanten. Durch die Abrundungen wird vermieden, dass das Förderband auf scharfe Kanten aufläuft und dabei beschädigt wird. In ähnlicher Weise wird eine Abnutzung des Bandes an scharfen Rändern der Löcher verhindert, indem diese Ränder abgerundet sind. Das Abrunden kann zum Beispiel durch ein Nachschleifen, durch Senken oder durch fertigungstechnisch bedingte Einschnürung der Löcher nach innen (z.B. beim Stanzen) geschehen.

Gemäß einer anderen Weiterentwicklung der Erfindung, die in Anspruch 7 wiedergegeben ist, enthält das Fördersystem Vorrichtungen zur Zentrierung der Förderbänder. Diese Vorrichtungen stellen sicher, dass das Förderband, bei dem es sich insbesondere um einen Zahnriemen handeln kann, immer geradeaus läuft. Gerade Zahnriemen haben aufgrund herstellungsbedingter Inhomogenitäten die Tendenz, seitlich wegzulaufen. Diese Tendenz wird durch die genannten Vorrichtungen zur Zentrierung ausgeglichen.

Eine spezielle Möglichkeit zur Ausgestaltung der genannten Vorrichtungen besteht dabei gemäß Anspruch 8 in sogenannten Lenkern, welche einen zweiarmigen Hebel mit einer Drehachse aufweisen, die senkrecht zur Laufrichtung des Förderbandes steht. An den beiden Armen des Hebels sind jeweils Anschlagflächen so angeordnet, dass das Förderband beim Verlassen der Spurmitte an mindestens eine der Anschlagflächen anstößt. Mit einem derartigen Lenker ist eine Selbstregelung des Bandlaufes auf die Spurmitte möglich. Bei einem Verlassen der Spurmitte stößt das Band nämlich gegen mindestens eine der Anschlagflächen an und drängt diese somit nach auβen, das heißt von der Spurmitte weg. Durch die Verbindung über den Hebel wird hierdurch jedoch die gegenüberliegende Anschlagfläche in die Gegenrichtung bewegt, das heißt zur Spurmitte hin. Bei dieser Bewegung übt die zweite Anschlagfläche einen Druck auf das Förderband aus, welcher dieses zurück zur Spurmitte drängt. Das Förderband sorgt somit mit Hilfe der Lenker für seine eigene Zentrierung.

Die Anschlagflächen bei einem Lenker der oben beschriebenen Art werden nach Anspruch 9 vorzugsweise durch die Seitenwände bzw. Flanken von Laufrollen gebildet, wobei das Förderband über die Laufrollen geführt wird. Dabei ist die Anordnung der Laufrollen und ihrer Anschlagflächen vorzugsweise so zu wählen, dass das Förderband in der zentrierten Position keinen Kontakt hierzu hat. Eine zusätzliche Geräuschentwicklung wird hierdurch im Normalbetrieb vermieden. Erst wenn das Förderband ausbricht, kann es kurzzeitig in Kontakt zu den Anschlagflächen kommen.

Vorrichtungen zur Zentrierung der Förderbänder werden gemäß Anspruch 11 vorzugsweise vor den Auflaufbereichen der Förderbänder auf die Umlenkrollen beziehungsweise auf die Antriebsrollen angeordnet. In diesen Bereichen sind die auf das Förderband wirkenden Zugkräfte groß genug, um eine Selbstzentrierung zu bewirken. Beim ablaufenden Teil hängt dagegen das Förderband trotz einer Vorspannung aufgrund seines Eigengewichtes durch, so dass es sich an dieser Stelle nicht steuern lässt. Vorzugsweise befinden sich die Zentrierungseinrichtungen möglichst kurz vor den Umlenkrollen beziehungsweise Antriebsrollen.

Bei dem Einsatz von Laufrollen der oben beschriebenen Art stehen gemäß Anspruch 10 die Seitenwände der Laufrollen vorzugsweise über das Förderband hinaus, das heißt, dass sie - zumindest im Falle der oberen Zentrierungseinrichtung - in die Bewegungsbahn der Transportbehälter hineinragen. Bei jedem Passieren eines Transportbehälters kommt es somit zu einem kurzzeitigen Kontakt zwischen dem Transportbehälter und den Laufrollen, wodurch die Laufrollen in Rotation versetzt werden. Da laufend Behälter vorbeikommen, drehen sich die Laufrollen ständig. Hierdurch entsteht, wenn das Förderband an den Flanken der Laufrollen anstößt, eine nur sehr geringe Relativbewegung zwischen der Laufrolle und dem Förderband, da sich die Laufrolle bereits dreht. Dadurch werden die Seitenflanken der Förderbänder geschont. Dies ist insbesondere bei der Verwendung von Zahnriemen vorteilhaft, da diese verhältnismäßig empfindlich sind. Durch die Drehung der Laufrollen kann jedoch eine Beschädigung der Zahnriemen mit groβer Sicherheit ausgeschlossen werden, so dass die angestrebten hohen Transportgeschwindigkeiten erreichbar sind. Die Laufrollen können zusätzlich mit einer gleitfähigen Beschichtung versehen sein, damit beim Kontakt mit den Transportbehältern und/oder dem Förderband ein möglichst geringer Verschleiß eintritt.

Zur Selbstzentrierung der Förderbänder kann weiterhin nach Anspruch 12 mindestens eine Antriebsrolle und/oder mindestens eine Umlenkrolle ballig ausgebildet sein. Das Förderband stellt sich immer so ein, dass es an der Stelle mit der höchsten Umfangsgeschwindigkeit läuft. Dies ist bei einer ballig ausgebildeten Rolle die Mittellinie der Lauffläche, da dort der größte Durchmesser vorliegt.

Im folgenden wird die Erfindung mit Hilfe der Figuren beispielhaft erläutert. Es zeigen:
- Fig. 1: eine schematische Aufsicht auf das Fördersystem;
- Fig. 2: einen Querschnitt durch das Fördersystem;
- Fig. 3: den Antrieb des Fördersystems in der Aufsicht und in der Seitenansicht;
- Fig. 4: eine Aufsicht auf eine Spanneinrichtung;
- Fig. 4a: eine Detailansicht der Spanneinrichtung;
- Fig. 4b: eine Detailansicht einer Spannvorrichtung mit integrierter Riemenüberwachung;
- Fig. 5: einen Lenker zur Zentrierung des Förderbandes;
- Fig. 6: eine Seitenansicht des Fördersystems mit der Anordnung der Lenker;
- Fig. 7: eine Lochbleche zur Unterstützung der Förderbänder;
- Fig. 8: ballig ausgebildete Antriebszahnräder;
- Fig. 9: einen modularen Aufbau einer längeren Förderstrecke.

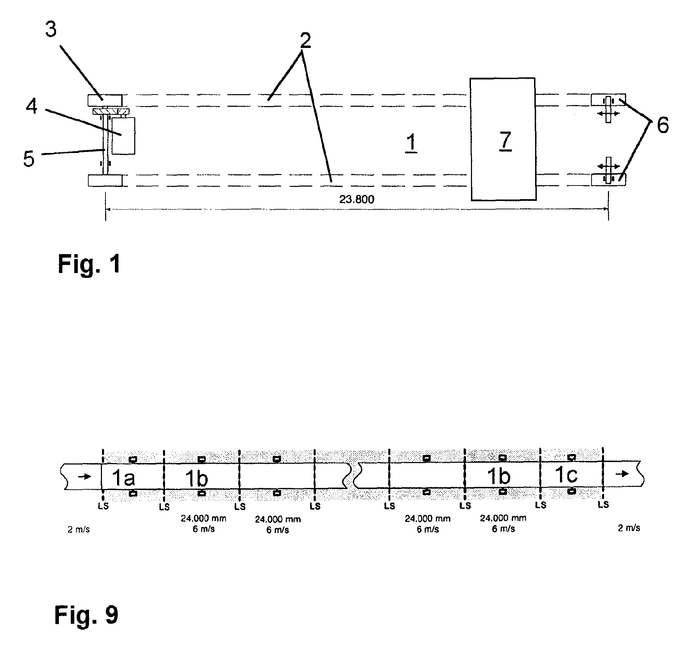

In Figur 1 ist in schematischer Darstellung die Aufsicht auf ein Segment eines erfindungsgemäßen Fördersystems dargestellt. Das Fördersystem 1 zeichnet sich dadurch aus, dass es zwei parallel verlaufende endlose Förderbänder 2 (gestrichelte Linien) enthält, von welchen ein Transportbehälter 7 getragen und befördert werden kann. Die Förderbänder 2 können verhältnismäßig schmal ausgelegt werden, so dass bei ihrem Umlauf selbst bei hohen Geschwindigkeiten von bis zu 6 m/s keine unverhältnismäßig hohen Walkarbeiten auftreten. Selbstverständlich könnten auch mehr als zwei parallele Laufbänder 2 vorgesehen werden, wenn dies aus Gründen einer ausreichenden Unterstützung und Förderung notwendig wäre.

Die Förderbänder 2 werden an einem Ende über Antriebsrollen 3 geführt, welche das erforderliche Drehmoment auf die Förderbänder übertragen. Die Antriebsrollen 3 sitzen dabei auf einer gemeinsamen Welle 5, welche von einem Motor 4 über ein Stirnradgetriebe angetrieben wird. Alternativ ist zu diesem Zweck auch ein Zahnriemengetriebe einsetzbar. Am gegenüberliegenden Ende verlaufen die Förderbänder 2 über Umlenkrollen 6, welche mit separaten Spanneinrichtungen versehen sind und daher ein individuelles Spannen der Bänder erlauben.

Das in Figur 1 dargestellte Segment 1 besteht aus einem selbsttragenden Grundaufbau, den Bandführungen und abnehmbaren Seitenverkleidungen. Der Antrieb und die Umlenkungen sind zusätzlich jeweils am Anfang beziehungsweise Ende des dargestellten Segments auf einer U-förmigen Jochkonstruktion angeordnet. Die Länge des in Figur 1 dargestellten Segments 1 einer Transportstrecke beträgt typischerweise etwa 24 m.

Um bei derartig langen Strecken eine ausreichende Übertragung des Drehmomentes auf das Förderband 2 sicherstellen zu können, wird erfindungsgemäß als Förderband ein Zahnriemen 2 eingesetzt. Die Kraftübertragung kann somit durch Formschluss über Zahnräder 3 auf der Antriebswelle erfolgen. Die Umlenkrollen 6 sind dagegen vorzugsweise unverzahnt ausgebildet. Die Zahnriemen und Zahnräder können auch schrägverzahnt ausgebildet sein.

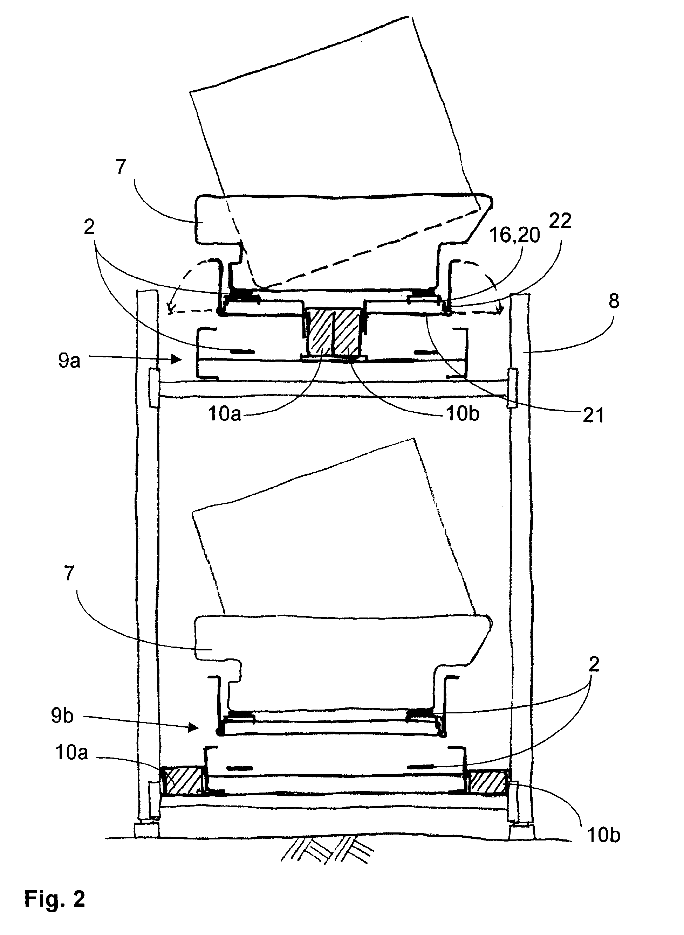

Figur 2 zeigt einen Querschnitt durch das in Figur 1 dargestellte Segment einer Förderstrecke. Zu erkennen ist in Figur 2, dass die Förderstrecke auf einem Gestell 8 aufgebaut ist, welches so hoch ausgelegt ist, dass es Raum für zwei übereinander angeordneten Transportstrecken 9a und 9b bietet. Um verschiedene Ausführungsformen der erfindungsgemäßen Anordnung erläutern zu können, unterscheiden sich die obere und untere Transportstrecke in Figur 2 in ihrer Bauweise. Wird nur eine Transportstrecke benötigt, so kann der Bauraum für die andere Transportstrecke frei bleiben.

In Figur 2 ist ferner erkennbar, dass sich auf der oberen Förderbahn 9a ein Behälter 7 befindet, welcher das zu transportierende Stückgut enthält. Hierbei kann es sich zum Beispiel um Koffer eines Flughafengepäcksystems handeln. Der Behälter wird von dem oberen Trum des Riemens 2 bewegt; der untere Trum läuft lose im Bereich unterhalb der Transportbahn. Der Riemen läuft auf Lochblechen 16, die in leicht herausnehmbare Lochblechauflagen 20 integriert sind, um ein einfaches Auswechseln der Lochbleche zu ermöglichen. Im Mittenbereich direkt unterhalb der Transportbahn des Gestells 8 ist ein Kabelkanal 10 erkennbar, der in einen Kabelkanal für Datenleitungen 10a und einen Kabelkanal für Energieleitungen unterteilt ist. Diese Kabelkanäle erlauben die integrierte Führung von Energie- und Datenleitungen entlang der Transportstrecke, so dass ein entsprechendes Segment des Fördersystems autark ist. Alternativ oder zusätzlich können Kabelkanäle 10a,b auch so angeordnet werden, wie bei der unteren Transportstrecke 9b gezeigt.

Beidseitig von den Kabelkanälen 10a,b befinden sich Abdekkungen 21, mittels derer durch die Lochbleche 16 durchtretender Riemenstaub aufgefangen und durch ein Herausnehmen der Abdeckungen 21 in einfacher Weise entfernt werden kann. Um im Störungsfalle ein Ausbrechen der Behälter 7 von der Transportbahn zu verhindern, sind an beiden Seiten der Transportbahn Leitplanken 22 vorgesehen. Diese lassen sich aus der in Figur 2 dargestellten Ausgangsstellung über ein Scharnier in die gestrichelt gezeichnete Position verschwenken, um für Wartungsarbeiten einen einfachen seitlichen Zugriff auf den Riemen 2 zu ermöglichen. Im Regelbetrieb berühren die Behälter die Leitplanken 22 nicht.

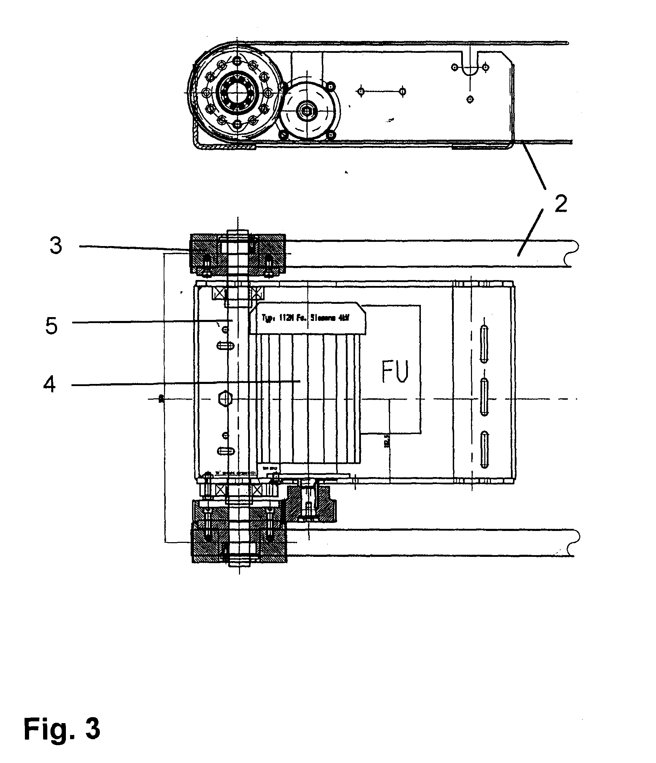

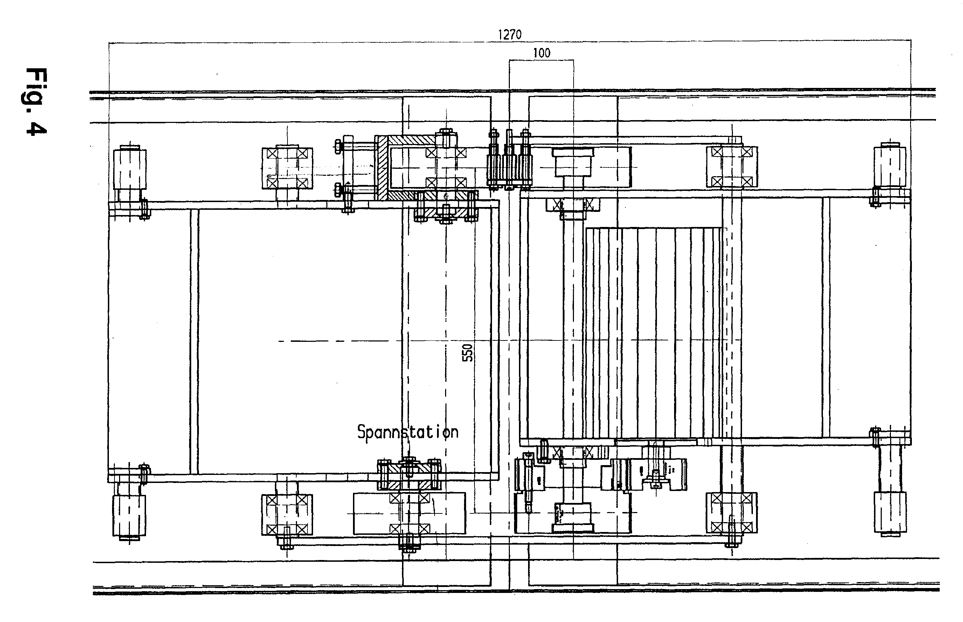

Figur 3 zeigt vergrößert das Antriebssystem der Fördereinrichtung in der Aufsicht (unterer Teil der Figur) und in einer Seitenansicht (oberer Teil der Figur). Der Motor 4 treibt über ein Stirnradgetriebe die Welle 5 und damit die Antriebszahnräder 3 an. Das Übersetzungsverhältnis des Stirnradgetriebes beträgt typischerweise 1,93 und die Antriebsleistung des Motors 4 ca. 3,1 kW. Anstelle eines Stirnradgetriebes wäre auch ein Antrieb über einen Zahnriemen möglich. Durch die Evolvente, die das Getriebe hergibt, tritt zugleich eine Geräuschdämmung ein. Bei dem Motor handelt es sich um einen Drehstrommotor, der wahlweise mit einem Frequenzumrichter ausgerüstet sein kann. Während man in der Fördertechnik häufig mit Aufsteckantrieben arbeitet, ist hier ein integrierter Antrieb gewählt, damit das Modul veränderbar ist.

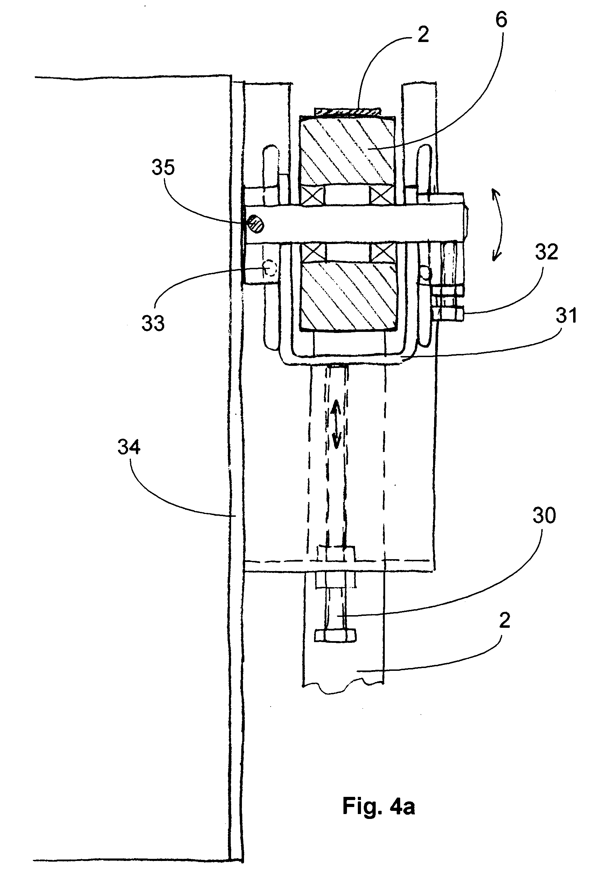

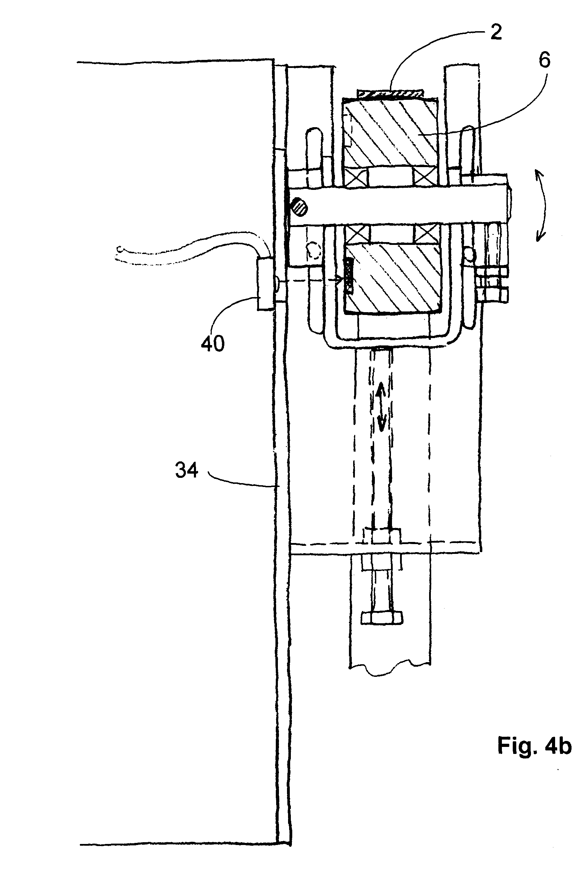

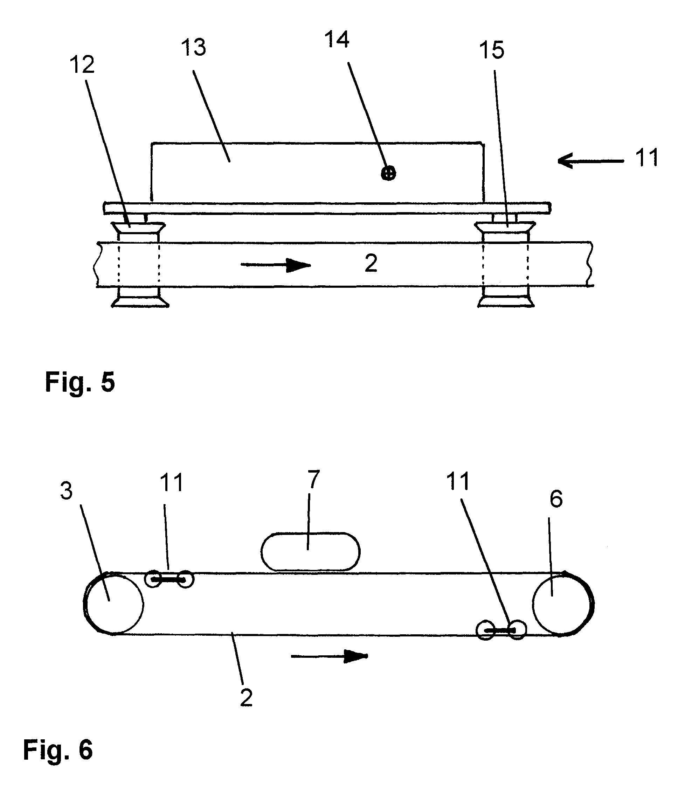

In Figur 4 ist die Spanneinrichtung des Fördersystems erkennbar. Typische Abmessungen des Fördersystems sind in dieser Figur in der Einheit Millimeter eingetragen. Die lose Umlenkrolle 6 wird über Spannschrauben eingestellt. Diese Einrichtung dient damit gleichzeitig neben anderen Elementen (vergleiche Lenker in Figur 5) zum Spuren des Systems. Dazu liegen entsprechende Elemente im auflaufenden Trum. Diese Rollen können justiert werden und erzeugen so die Grundstellung, während die weiter unten beschriebenen Lenker die Eigendynamik auffangen.

Die Umlenkrolle 6 und ihre Justagemöglichkeiten bei aufgelegtem Riemen 2 sind in Fig. 4a näher dargestellt. Die Justage geschieht in zwei Schritten: Zunächst wird die Laufrichtung der Umlenkrolle 6 über eine Justierschraube 32 um eine mit dem Doppelpfeil angedeutete Schwenkachse bezogen auf einen Drehpunkt 35 so justiert, daß der Riemen nicht wegläuft. Diese Stellung wird dann fixiert. Anschließend kann die in Langlöchern 33 geführte Spannklaue durch Anziehen einer Spannschraube 30 gegenüber dem Spannjoch 34 verschoben werden, wodurch der Riemen 2 gespannt wird. Wie aus Fig. 4a weiter ersichtlich, ist die Umlenkrolle 6 leicht ballig ausgebildet, um eine Selbstzentrierung des Riemens 2 zu ermöglichen.

In Figur 4b ist eine Überwachungseinrichtung dargestellt, durch die die ordnungsgemäße Funktion des Riemens 2 überwacht werden kann. Dazu ist in einem Winkelsegment der Auβenflanke der Umlenkrolle 6 eine Markierung vorgesehen, die bei ihrem Vorbeilauf von einem am Spannjoch 34 angeordneten optischen oder induktiven Sensor 40 (z.B. Gabellichtschranke) erfaßt wird. Anhand der Impulse des Sensors 40 kann die Steuerung die Drehzahl der vom Riemen getriebenen Umlenkrolle erfassen und so eine Störung melden, falls die Riemenspannung nicht mehr dazu ausreicht, die Umlenkrolle 6 auf eine Drehzahl zu bringen, die zumindest näherungsweise der des Antriebszahnrades 3 entspricht.

Die genannten Lenker zur Zentrierung der Zahnriemen 2 sind in Figur 5 vergrößert dargestellt. Ein derartiger Lenker 11 besteht aus zwei Laufrollen 12 und 15, welche an den entgegengesetzten Enden eines Hebelarmes 13 angeordnet sind. Der Hebelarm 13 ist um eine relativ zur Laufrichtung des Förderbandes 2 senkrechte Drehachse 14 (senkrecht zur Zeichenebene) drehbar. Im Normalbetrieb, das heißt bei zentriertem Verlauf des Zahnriemens 2, hat der Zahnriemen keinen Kontakt zu den Laufrollen 12 und 15. Hierdurch wird Verschleiß und eine unnötige Geräuschentwicklung vermieden. Wenn der Zahnriemen 2 jedoch aus der Spurmitte ausbricht, was aufgrund von herstellungsbedingten Inhomogenitäten von Zahnriemen häufig der Fall sein kann, stößt er an eine der Stirnflächen der Laufrollen an. Hierdurch kommt es zu einer Auslenkung der entsprechenden Laufrolle, beispielsweise der Rolle 15, in der Ausbruchsrichtung des Zahnriemens 2. Über die Drehachse 14 und den Hebel 13 wird jedoch gleichzeitig eine gegenläufige Bewegung der gegenüberliegenden Laufrolle, im Beispiel also der Laufrolle 12, erzeugt. Diese Gegenbewegung drängt dann den Zahnriemen 2 zum Zentrum der Spur zurück. Dabei kann durch eine geeignete Einstellung der Hebelarme, das heißt der Abstände der Laufrollen 12 beziehungsweise 15 von der Drehachse 14, das Regelverhalten des Lenkers 11 eingestellt werden. Über ungleich lange Hebelarme lässt sich insbesondere die an einer Laufrolle aufgenommene Auslenkung in eine an der anderen Laufrolle vergrößert stattfindende Gegenauslenkung übersetzen.

In Figur 6 ist eine schematische Seitenansicht auf ein Fördersegment dargestellt, in welcher die Anordnung der Lenker 11 gemäß Figur 5 dargestellt ist. Erkennbar ist, dass derartige Lenker 11a,b nur im Auflaufbereich des Zahnriemens 2 unmittelbar vor der Antriebsrolle 3 (Lenker 11a) beziehungsweise der Umlenkrolle 6 (Lenker llb) angeordnet werden. Es zeigt sich nämlich, dass nur in diesen Bereichen die auf den Zahnriemen 2 wirkenden Zugkräfte groß genug sind, um die gewünschte Zentrierung zu bewirken. Weiterhin ist in Figur 6 angedeutet, dass die Seitenflächen der Laufrollen geringfügig über die Ebene des Zahnriemens 2 in die Bewegungsbahn der Transportbehälter 7 hineinstehen. Beim Passieren des Behälters 7 kommen die Laufrollen des Lenkers 11a daher mit der Behälterunterseite kurzzeitig in Kontakt und werden so in Rotation versetzt. Kommt es dann später zu einem Kontakt zwischen den Zahnriemen 2 und einer Laufrolle des Lenkers 11a, so ist deren Relativgeschwindigkeit gering beziehungsweise im Idealfall gleich Null, was den Verschleiß am Zahnriemen minimiert. Bei dem unteren Lenker llb ist eine Berührung zwischen Laufrolle und Zahnriemen weniger kritisch, da der Zahnriemen an dieser Stelle unter geringerer Spannung steht als beim Lenker 11a. Würde der Zahnriemen 2 beim seitlichen Ausbrechen "angekratzt", so könnten hierdurch die Stahldrähte in der Riemenstruktur freigesetzt und der Riemen dadurch unbrauchbar werden. Dies ist aus Kostengründen selbstverständlich möglichst zu verhindern, auch wenn bei der erfindungsgemäßen Vorrichtung die erforderliche Stillstandszeit zum Wechseln der Zahnriemen 2 verhältnismäβig kurz ist. Ein Zahnriemen 2 kann nämlich frei eingespurt und aus seiner Führung herausgenommen werden, ohne dass Rollen entfernt werden müssten. Der Riemen 2 muss nur entspannt werden und kann dann heruntergenommen werden, da die Antriebsrollen nur einseitig auf einer Achse sitzen.

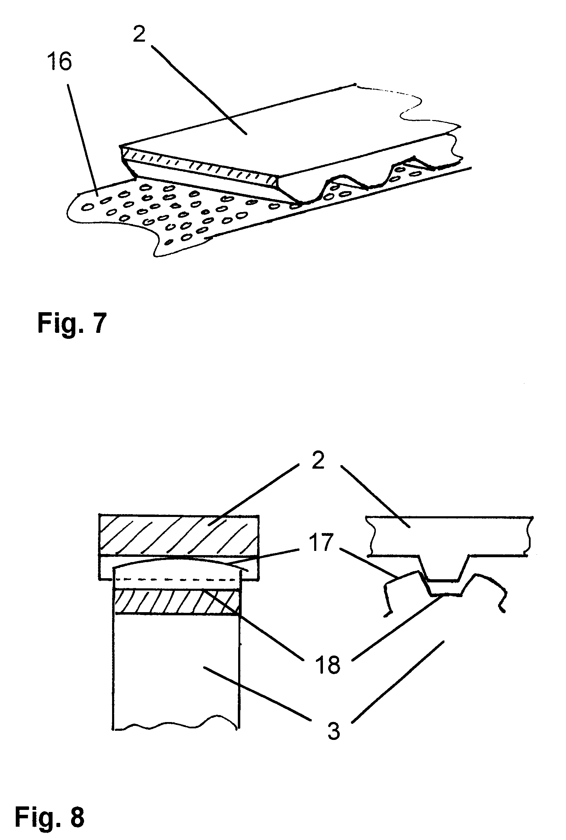

In Figur 7 ist erkennbar, wie der Zahnriemen 2 auf der groβen freien Strecke zwischen den Umlenk- beziehungsweise Antriebsrollen unterstützt wird, damit er unter der Belastung nicht durchhängt. Diese Unterstützung erfolgt vorzugsweise durch ein Lochblech 16, über welches der Zahnriemen 2 gleitet. Die Löcher des Bleches sind jeweils in versetzten Reihen angeordnet und vorzugsweise fertigungstechnisch nach innen eingeschnürt ausgebildet, so dass sie keine den Zahnriemen 2 belastende Kanten darstellen. Überraschenderweise ist der Verschleiß des Zahnriemens 2 durch das Gleiten über die Bleche 16 vernachlässigbar gering und auch die Geräuschentwicklung, die bei Lochblechen gegenüber normalen Blechen verursacht wird, trotz hoher Bandgeschwindigkeiten akzeptabel. So fällt die bei normalen Blechen bei einer Bandgeschwindigkeit von 6 m/s typischerweise eintretende Geräuschentwicklung von über 90 dBA, die in normalen Arbeitsumgebungen nicht mehr akzeptabel ist, auf einen Wert von unter 80 dBA ab. Für diesen Effekt ist möglicherweise die Ableitung von Druckwellen durch die Löcher der Bleche verantwortlich.

In Figur 8 ist eine Veränderung der Antriebszahnräder 3 dargestellt, welche zu einer Selbstzentrierung des Zahnriemens 2 beiträgt. Der rechte Teil der Figur zeigt einen Querschnitt durch den Zahnriemen 2 und das Zahnrad 3, der linke eine Seitenansicht. Um den Geradeauslauf des Zahnriemens 2 zu erhöhen, ist das Antriebszahnrad 3 leicht ballig ausgebildet, das heißt, dass die Zähne nach außen leicht abfallend verlaufen. Dabei haben nur die Außenkanten 17 der Zähne einen solchen balligen Verlauf, während der Zahnfuß 18 (Zahngrund) gerade bleibt. Die Zähne des Zahnriemens 2 berühren den Zahnfuß 18 nicht. Ein Antrieb des Zahnriemens 2 erfolgt vielmehr nur über die Zahnflanken. Aufgrund der balligen Ausbildung der Zähne nimmt die Umfangsgeschwindigkeit nach außen hin ab, während sie in der Mitte am größten ist, da hier der größte Durchmesser des Zahnrades vorliegt. Der Zahnriemen 2 stellt sich immer so ein, dass er an der Stelle mit der größten Umfangsgeschwindigkeit läuft, also am höchsten Punkt. Diese Maßnahme trägt zur Selbstzentrierung des Zahnriemens bei.

Die bisherige Beschreibung bezog sich auf eine kleinste Einheit des erfindungsgemäßen Fördersystems, welche zwei parallele Förderbänder sowie zwei Antriebszahnräder und zwei Umlenkrollen enthält (vgl. Figur 1). Eine derartige Einheit hat typischerweise eine Länge von 24 m. Sie kann als Segment dazu verwendet werden, modulartig eine Förderstrecke quasi beliebiger Länge aufzubauen. Zu diesem Zweck werden so viele Fördersegmente wie gewünscht aneinander gesetzt. Vorzugsweise findet der Zusammenbau der Segmente mit Hilfe der in Figur 2 erkennbaren Gestelle 8 statt. In das Gestell kann ein Antrieb eingebaut werden, der für Beschleunigen, Schnellfahren und Verzögern verwendet werden kann, sowie eine Spanneinrichtung, die ebenfalls für die drei Betriebsarten geeignet ist.

In Figur 9 ist schematisch ein gerader Abschnitt einer Förderstrecke dargestellt, welcher einen Beschleunigungsabschnitt la am Eingang sowie einen Bremsabschnitt lc am Ende enthält. Zwischen diesen sind eine Vielzahl von Transportsegmenten 1b mit einer typischen Länge von 24 m angeordnet. Auf der Beschleunigungsstrecke la findet ein Übergang der Geschwindigkeit der Transportbehälter von der Normalgeschwindigkeit (2 m/s) auf die schnelle Fördergeschwindigkeit von 6 m/s statt. Im Bereich der Segmente 1b findet der Transport dann mit konstanter Geschwindigkeit von 6 m/s statt. Diese Geschwindigkeit wird auf der Bremsstrecke lc wieder auf Normalgeschwindigkeit abgebaut.

Die Beschleunigung ist in verschiedenen Varianten durchführbar. Die bevorzugte Gestelllänge beträgt 3 m, da dies dem optimalen Zuschnitt von Blechtafeln entspricht. Auf dieser kurzen Distanz kann das Fördergut jedoch nicht von 0 m/s auf 6 m/s beschleunigt werden, da hierzu die Reibung auf den Zahnriemen zu gering ist. Deshalb muss in mehreren Stufen beschleunigt werden. Dazu können entweder drei oder vier Abschnitte jeweils mit 2 m/s, 4 m/s und 6 m/s konstant durchlaufen werden, wodurch das Fördergut jeweils beschleunigt wird. Für eine derartige Beschleunigung sind ca. 12 m erforderlich. Zum anderen ist auch ein dynamischer Betrieb möglich. Wenn ein Behälter den entsprechenden Bereich erreicht, wird die Geschwindigkeit sukzessive jeweils gesteigert, und das nächste Gestell übernimmt dann mit der Geschwindigkeit des vorhergehenden Gestells. In ähnlicher Weise kann natürlich auch bei der Verzögerung verfahren werden. Die dynamische Beschleunigung hat den Vorteil, dass keine Relativbewegungen zwischen den Zahnriemen und den Transportbehältern auftreten.

Auf der Förderstrecke können Gepäckbehälter mit einer Geschwindigkeit von 6 m/s transportiert werden. Die Transportbehälter können typischerweise eine Nutzlast von maximal 40 kg bei einem Eigengewicht von ca. 20 kg aufnehmen. Der Abstand zwischen den Transportbehältern beträgt ca. 5,2 m, und die Länge eines Behälters etwa 1,3 m. Hieraus errechnet sich ein maximaler Durchsatz der Förderstrecke von über 4000 Behältern pro Stunde. Es können auch Sonderbehälter für Sperrgepäck (ca. 2,3 m Länge) transportiert werden. Jeder Übergang zwischen zwei Bändern wird durch eine Lichtschranke abgesichert (LS in Figur 9). Eine Störung liegt definitionsgemäß dann vor, wenn der Lichtstrahl bei Durchfahrt nicht innerhalb einer Zeit von etwa 0,4 s wieder freigegeben wird. Die Segmente der Förderstrecke werden an den Bandübergängen so miteinander verbunden, dass ein Überfahren eines Transportbehälters ohne Beeinflussung der Laufruhe ermöglicht wird.

Selbstverständlich ist es auch möglich, Kurvenverläufe mit der Förderstrecke zu realisieren. Für solche Richtungsänderungen werden konventionelle Rundbögen verwendet, allerdings müssen vorher die Behälter auf ca. 2 m/s abgebremst werden.

### Bezugszeichen

- 1: Fördersystem
- 2: Zahnriemen
- 3: Antriebszahnrad
- 4: Motor
- 5: Welle
- 6: Umlenkrolle
- 7: Transportbehälter
- 8: Gestell
- 9a: Oberbehälterfahrbahn
- 9b: Unterbehälterfahrbahn
- 10a: Kabelkanal Datenleitungen
- 10b: Kabelkanal Energieleitungen
- 11: Lenker
- 12: Laufrolle
- 13: Hebel
- 14: Drehachse
- 15: Laufrolle
- 16: Lochblech
- 17: Außenkante Zahn
- 18: Zahnfuß
- 20: Lochblechauflage
- 21: Abdeckung
- 22: Leitplanke
- 30: Spannschraube
- 31: Spannklaue
- 32: Justierschraube
- 33: Spannklauenführung
- 34: Spannjoch
- 35: Drehpunkt
- 40: Sensor

## Patentansprüche

1. Fördersystem (1) für Transportbehälter (7) entlang einer vorgegebenen Bahn,
dadurch gekennzeichnet, dass es mindestens zwei parallele, endlos umlaufende Förderbänder (2) enthält, welche einen Transportbehälter (7) gemeinsam tragen und führen können.

2. Fördersystem nach Anspruch 1,
dadurch gekennzeichnet, dass die Förderbänder als Zahnriemen (2) ausgestaltet sind.

3. Fördersystem nach einem der Ansprüche 1 oder 2,
dadurch gekennzeichnet, dass die Antriebsrollen (3) der Förderbänder (2) auf einer gemeinsamen Welle (5) angeordnet sind.

4. Fördersystem nach einem der Ansprüche 1 bis 3,
dadurch gekennzeichnet, dass die Umlenkrollen (6) der Förderbänder (2) separate Spannvorrichtungen aufweisen.

5. Fördersystem nach einem der Ansprüche 1 bis 4,
dadurch gekennzeichnet, dass unter den Förderbändern (2) Lochbleche (16) als tragende Gleitflächen angeordnet sind.

6. Fördersystem nach Anspruch 5,
dadurch gekennzeichnet, dass die dem Förderband (2) zugewandten Kanten der Lochbleche (16) abgerundet sind.

7. Fördersystem nach einem der Ansprüche 1 bis 6,
dadurch gekennzeichnet, dass es Vorrichtungen (11) zur Zentrierung der Förderbänder (2) aufweist.

8. Fördersystem nach Anspruch 7,
dadurch gekennzeichnet, dass die Vorrichtungen zur Zentrierung der Förderbänder (2) durch einen Lenker (11) gebildet werden, welcher einen zweiarmigen Hebel (13) mit einer zur Laufrichtung des Förderbandes (2) senkrechten Drehachse (14) aufweist, wobei an den Armen des Hebels jeweils Anschlagflächen (12, 15) so angeordnet sind, dass das Förderband (2) beim Verlassen der Spurmitte hieran anstößt.

9. Fördersystem nach Anspruch 8,
dadurch gekennzeichnet, dass die Anschlagflächen durch die Seitenwände von Laufrollen (12, 15) gebildet werden, über welche das Förderband (2) geführt wird.

10. Fördersystem nach Anspruch 9,
dadurch gekennzeichnet, dass die Seitenwände der Laufrollen (12, 15) über das Förderband (2) hinaus in die Bewegungsbahn der Transportbehälter (7) ragen.

11. Fördersystem nach einem der Ansprüche 7 bis 10,
dadurch gekennzeichnet, dass die Vorrichtung (11) zur Zentrierung der Förderbänder vor den Auflaufbereichen der Förderbänder (2) auf die Umlenkrollen (6) und/oder auf die Antriebsrollen (3) angeordnet ist.

12. Fördersystem nach einem der Ansprüche 1 bis 11,
dadurch gekennzeichnet, dass mindestens eine Antriebsrolle (3) und/oder eine Umlenkrolle (6) ballig ausgebildet ist.
